# FASCICULE DE BREVET EUROPEEN

(11) **EP 4 115 540 B1**
(45) Date de publication et mention de la délivrance du brevet: **03.12.2025**
(21) Numéro de dépôt: 21707734.6
(22) Date de dépôt: 01.03.2021
(51) Int. Cl.: H04B 7/155, H04B 1/3877

(54) **SYSTÈME NOMADE DE TRANSMISSION DE DONNÉES À ULTRA-HAUT DÉBIT**
MOBILES ULTRASCHNELLES DATENÜBERTRAGUNGSSYSTEM
MOBILE ULTRA-HIGH-SPEED DATA TRANSMISSION SYSTEM

(30) Priorité: 02.03.2020 FR 2002107
(43) Date de publication de la demande: 11.01.2023
(73) Titulaire: Fournier, Laurent, 78000 Versailles (FR)
(72) Inventeur: Fournier, Laurent, 78000 Versailles (FR)
(74) Mandataire: LLR
(86) Numéro de dépôt international: PCT/EP2021/055038
(87) Numéro de publication internationale: WO 2021/175777

(56) Documents cités:
- EP-A1- 3 657 735
- US-A1- 2016 197 434
- US-A1- 2019 215 065

## Description

L'invention concerne un système nomade de transmission de données à ultra-haut débit, c'est-à-dire à un débit supérieur à 500 mégabits par seconde. En particulier, elle concerne la transmission de données à ultra haut débit depuis l'extérieur vers un terminal situé dans un espace intérieur.

La transmission des données vers un espace intérieur, à ultra haut débit, est rendue délicate par la difficulté de faire pénétrer les signaux à travers les parois des bâtiments.

On connaît déjà dans l'état la technique des solutions pour transmettre des signaux depuis des stations radios extérieures vers des espaces intérieurs. L'une d'entre elle est une solution en espace intérieur de type Box 4G ou clé 4G. Cependant, elle n'atteint pas les performances de l'ultra haut-débit à cause des insuffisances de couverture des fréquences élevées à l'intérieur des bâtiments en ce qui concerne la liaison descendante, et à cause de l'absence de directivité de son système antennaire en ce qui concerne la liaison montante. Une autre solution est une solution en extérieure de type « CPE Outdoor ». Cependant, de part ses dimensions et ses équipements nécessaires, cette solution est très intrusive, difficile à installer et onéreuse. Elle nécessite en particulier une installation complexe via des perçages ou l'utilisation de systèmes de fixation contraignants.

US2016/197434 divulgue un système de transmission de données comprenant une caméra située en extérieur et une unité WiFi située en intérieur, reliés par des moyens filaires de transmission de données s'étendant entre un ouvrant et un dormant d'une paroi, et par des moyens filaire de connexion électrique s'étendant entre l'ouvrant et le dormant.

US2019/215065 divulgue un système de transmission de données entre deux unités de transmission de données, situées de part et d'autre d'une paroi, et communiquant sans fil.

On connaît d'après le document FR1874196, au nom du demandeur, un système de transmission haut débit à travers une fenêtre, présentant deux unités de transmission fixées l'une à l'autre de part et d'autre de la fenêtre. La transmission de données entre les unités, respectivement extérieure et intérieure, est réalisée par WiFi. En outre, l'unité située à l'intérieur alimente en électricité l'unité extérieure par chargement sans fil. Ce système résout une partie des inconvénients des solutions précédentes car il permet une transmission à haut débit, c'est-à-dire à 350 mégabits en liaison descendante, tout en étant bien plus simple et moins cher à installer que la solution de type « CPE Outdoor ».

Cependant, ce système présente en pratique plusieurs inconvénients.

D'une part, il ne permet pas la transmission à ultra haut débit, c'est-à-dire la transmission de données issues de l'extérieur à un terminal intérieur à un débit supérieur à 500 mégabits. En effet, l'utilisation du WiFi entre les deux unités nécessite l'allocation de la moitié de la bande passante disponible, ce qui diminue de moitié le débit restant pour la transmission de données entre l'unité intérieure et le terminal intérieur auquel les données sont destinées. Pour compenser cette perte, l'utilisation de routeurs WiFi de type 802.11ac triple radio MIMO 3*3 ou 802.11ax MIMO 4*4 est trop onéreuse. En outre, il est nécessaire de garantir la transmission d'énergie sans fil entre les deux unités dans le pire des cas, celui d'une fenêtre d'épaisseur importante. Or, dans ce cas, la taille des systèmes antennaires devient trop grande, et la consommation d'énergie trop importante. De plus, cette transmission sans fil génère un impact thermique qu'il est difficile et coûteux de contrôler et qui nécessite des aménagements dimensionnels contraignants.

L'invention a notamment pour but de fournir un système nomade de transmission de données à un débit supérieur à 500 mégabits, peu onéreux et très simple à installer.

A cet effet l'invention a pour objet un système de transmission de données à travers une paroi comportant un ouvrant articulé sur un dormant tel que défini dans la revendication 1.

Ainsi, le système tire profit de l'articulation de l'ouvrant sur le dormant pour étendre les moyens de connexion électrique et de transmission de données à travers la paroi en se passant de perçage ou de moyen de fixation complexe. Il est particulièrement simple à installer. Les moyens de transmission filaire de données permettent d'atteindre un débit supérieur à 500 mégabits, de préférence supérieur ou égal à 1 gigabit par seconde, en évitant la perte de bande passante qui serait due à l'utilisation du WiFi. Les moyens de connexion électrique filaire permettent eux, par rapport à un système de transmission d'énergie sans fil, de baisser la consommation électrique et de diminuer la taille et l'impact thermique des composants du système. L'invention permet donc de fournir un système particulièrement nomade, c'est-à-dire simple à installer et peu contraignant à manipuler, permettant une transmission de données en ultra haut-débit sans avoir à ajouter d'éléments onéreux.

Avantageusement, les moyens filaires de transmission de données et/ou de connexion électrique présentent une forme générale plane de façon à pouvoir s'étendre entre les surfaces jointives complémentaires de l'ouvrant et du dormant lorsque l'ouvrant est en position fermée sur le dormant.

Ainsi, les moyens de transmission et/ou de connexion électrique ne gênent pas une fermeture de l'ouvrant sur le dormant. Ils sont donc particulièrement discrets et peu contraignants.

Avantageusement, les moyens de transmission filaire de données et les moyens de connexion électrique filaire comprennent un câble Ethernet commun apte à la fois à transmettre les données à un débit supérieur ou égal à 500 mégabits et à transmettre le courant.

Ainsi, on utilise l'alimentation électrique par câble Ethernet, technologie également appelé « Power over Ethernet » ou « PoE » en anglais, pour transmettre d'une unité à l'autre au moyen d'un seul câble à la fois les données à ultra haut débit et le courant électrique. Cette technologie permet de diminuer encore les contraintes dimensionnelles du système, en évitant la manipulation et le positionnement de plusieurs câbles, et de rendre plus simple son installation.

De préférence, le débit est supérieur ou égal à 750 mégabits par seconde, de préférence supérieur ou égal à 1 gigabit par seconde.

Ainsi, le système permet la transmission depuis l'extérieur jusqu'à un terminal situé à l'intérieur, avec un débit particulièrement élevé, et ce tout en étant particulièrement simple à manipuler et peu onéreux au vu des éléments le composant.

Le système comprend des aimants coopérant par attraction de façon à fixer les unités sur la paroi par serrage de la paroi entre ces unités.

Ainsi, ce système d'aimants permet de se passer de l'utilisation de perçage et de vis. La facilité d'installation du système en est accrue. Cela permet aussi de retirer les unités de la paroi sans dégradation et sans opération de démontage particulière, ce qui est indispensable si l'utilisateur souhaite déplacer fréquemment son système entre plusieurs logements ou le ranger en intérieur par exemple durant une absence prolongée. La fixation par aimants est également avantageuse en comparaison d'une fixation par adhésif. En effet, l'inventeur a déterminé que le collage et le décollage d'unités de transmissions sur la paroi, notamment par l'utilisation de bandes dites « nanotape », posait plusieurs problèmes techniques. Tout d'abord, ces bandes laissent des traces sur les fenêtres. En outre, plusieurs opérations successives de repositionnement des unités dégradent les bandes, dont l'adhésion finit par diminuer. Ce phénomène est aggravé en extérieur à cause des variations de température, et pour y pallier il est nécessaire de nettoyer régulièrement les parois, sans garantie d'un retour à une adhésion convenable.

En d'autres termes, l'utilisation de bandes « nanotape » risque de conduire à des chutes des unités, l'entretien de ces bandes est fastidieux et ne garantit pas de maintien en position des unités. L'utilisation d'aimants, durables et sans nécessiter d'entretien pour maintenir leur niveau d'adhésion, est donc préférable à celles de bandes adhésives. En outre, les déplacements des unités fixées par aimants ne laissent pas de trace sur les parois.

Avantageusement, l'un des aimants étant un aimant principal, au moins l'une des unités présente un logement d'aimant, le logement comprenant un épaulement de positionnement de l'aimant principal, l'épaulement séparant une première partie du logement destiné à loger l'aimant principal d'une deuxième partie du logement pouvant servir à loger si nécessaire un ou plusieurs aimants additionnels.

Ainsi, c'est dans le logement qu'est logé l'aimant ou que sont logés les aimants, permettant la fixation de l'unité à la paroi. Le logement est agencé pour permettre l'intégration d'un ou plusieurs aimants en son sein, ce qui permet d'adapter le niveau d'aimantation voulu, en particulier en fonction de l'épaisseur ou du type de la paroi contre laquelle les unités sont fixées. Si le niveau d'aimantation désiré est normal, par exemple car la paroi est une fenêtre à double-vitrage classique, il suffit de loger dans le logement uniquement l'aimant principal, celui-ci entrant alors en butée contre l'épaulement de positionnement de manière à rester dans la première partie du logement. En revanche, si l'on souhaite un niveau d'aimantation plus élevé, par exemple car la paroi est une fenêtre triple-vitrage particulièrement épaisse, alors il peut être nécessaire d'ajouter un ou plusieurs aimants additionnels dans le logement en plus de l'aimant principal. Dans ce cas, ce ou ces logements additionnels sont dimensionnés de manière à ne pas entrer en butée contre l'épaulement et donc à pénétrer dans la deuxième partie du logement tandis que l'aimant principal vient lui se placer toujours dans la première partie, contre l'épaulement. Comme le logement est agencé pour permettre ces différentes mises en place, un même boitier et donc un même système peut être fixé sur des parois de différentes épaisseurs ou même de différents types. Il n'est donc pas nécessaire de prévoir des boitiers spécifiques à un niveau d'aimantation particulier, il suffit d'ajouter des aimants additionnels si nécessaire dans le logement, cela pouvant même être fait durant l'installation des unités au cours d'essais des différents aimants. Bien entendu, il est avantageux que l'ensemble des logements des unités soient réalisés de cette manière, par exemple avec quatre logements de ce type par unité, à raison d'un à chaque coin d'une unité.

Ces logements permettent donc de répondre au problème technique de l'adaptation de l'aimantation aux différentes parois. L'aimant principal peut ainsi être adapté à la plupart des fenêtres, les aimants additionnels étant ajoutés en cas de fenêtre plus épaisse que la normale.

De préférence, l'aimant principal, le ou les aimants additionnels et le logement présentent une forme générale cylindrique de révolution, la première partie ayant un premier diamètre, la deuxième partie ayant un deuxième diamètre plus petit que le premier diamètre, la deuxième partie étant coaxiale à la première partie.

Ainsi, pour une fixation à une paroi classique, seul l'aimant principal adapté à l'aimantation normale est inséré dans le logement. Au sein du logement, il prend place dans la première partie, arrivant en butée contre l'épaulement formé par la réduction du diamètre à l'entrée de la deuxième partie, et il s'étend éventuellement dans toute cette première partie de manière à affleurer à l'ouverture du logement et donc au plus près de la paroi. Si les aimants additionnels sont nécessaires, ils sont introduits avant l'aimant principal dans le logement, prenant place dans la deuxième partie tout en étant fixé par aimantation à l'aimant principal qui reste lui dans la première partie.

Cet agencement du logement en deux parties cylindriques de révolution de diamètres différents permet en d'autres termes d'insérer dans le logement soit l'aimant principal seul, étant donné qu'il sera maintenu en position grâce à l'épaulement et laissera la deuxième partie du logement vide, soit un assemblage d'aimants inséré d'un seul tenant, comprenant l'aimant principal et un ou plusieurs aimants additionnels fixés par aimantation à l'aimant principal. Changer le niveau d'aimantation est donc particulièrement aisé. En particulier, dans le cadre d'aimants en néodyme cylindriques de révolution de même type, le niveau d'aimantation dépend de la hauteur de chaque aimant inséré dans le logement. On peut donc insérer dans le logement de nombreuses combinaisons d'aimants, allant d'un aimant principal seul maintenu en position par l'épaulement, à trois, quatre ou plus d'aimants comprenant l'aimant principal et des aimants additionnels prenant place dans la deuxième partie du logement et maintenus en position par leur aimantation à l'aimant principal.

En variante, on peut également prévoir un aimant principal de hauteur réduite par rapport à la hauteur de la première partie du logement. Dans ce cas, afin que cet aimant affleure au niveau de l'ouverture du logement pour rester au plus près de la paroi, on complète la première partie du logement par un support de l'aimant, situé donc entre l'aimant principal et l'épaulement. Ce support est non-aimanté, il peut s'agir d'un cylindre creux en plastique par exemple. Cette variante vise à diminuer le niveau d'aimantation par rapport à l'aimantation due à l'aimant principal classique.

Ainsi, le logement permet d'ajuster à souhait l'aimantation voulue entre les unités situées de part et d'autre de la paroi, de façon à aboutir à la force d'adhérence désirée quelle que soit la paroi séparant les unités.

Avantageusement, la première unité comprend une première interface de transmission de données sans-fil vers et depuis un premier équipement distant, et la seconde unité comprend une seconde interface de transmission de données sans-fil vers et depuis un second équipement distant.

Ainsi, l'une des unités, en particulier celle située à l'extérieur, peut communiquer avec un réseau mobile par exemple via une antenne relais, une station radio au sol ou un satellite, tandis que l'autre unité, située à l'intérieur d'un espace de l'autre côté de la paroi, peut communiquer avec un terminal d'un utilisateur. Le système assure alors la transmission en liaison descendante depuis l'extérieur jusqu'au terminal, et ce avec un débit supérieur à 500 mégabits par seconde et dans l'autre sens en liaison montante à un débit supérieur ou égal à 100 mégabits par seconde. Ce débit est rendu possible notamment par le fait de disposer d'une unité à l'extérieur et d'une autre à l'intérieur.

De préférence, la première interface comporte :
- un équipement antennaire apte à recevoir des signaux sur des fréquences d'usage des réseaux mobiles inférieures à 6 GHz avec un gain supérieur ou égal à 6 dBi,
- un équipement radio supportant un débit descendant de données supérieur ou égal à 500 mégabits par seconde,
- un routeur supportant un débit descendant de données supérieur ou égal à 500 mégabits par seconde et présentant un port Ethernet de type « PoE In » supportant un débit descendant supérieur ou égal à 1 gigabits par seconde, de préférence supérieur ou égal à 10 gigabits par seconde.

Ainsi, chacun des éléments composant la première interface est capable d'extraire de l'ultra haut débit, en particulier de l'extérieur via les réseaux mobiles tels que la 4G ou la 5G, et de transmettre de l'ultra haut débit à la deuxième unité située de l'autre côté de la paroi. Dans toute la demande, par « fréquences d'usage des réseaux mobiles », on vise par exemple les bandes suivantes :
- A 700 MHz, les bandes 12, 13, 14, 17, 28, 29, 44, 65, 68, 85, n12, n14, n28, n29, n83
- A 800 MHz, les bandes 20, n20, n82, n91, n92,
- A 850 MHz, les bandes 5, 18, 19, 26, n5, n18, n89,
- A 1 500 MHz, les bandes 50, 51, 75, 76, n50, n51, n74, n75, n76, n91, n92, n93, n94,
- A 1600 MHz, la bande 24
- A 1700 MHz, les bandes 4, 70, n66, n86,
- A 1800 MHz, les bandes 3, n3,
- A 1900 MHz, les bandes 2, 25, 37, n2, n25, n39,
- A 2000 MHz, les bandes 34, n70,
- A 2100 MHz, les bandes 1, 65, n1, n34, n65, n84, n95,
- A 2300 MHz, les bandes 30, 40, n30, n40,
- A 2400 MHz, la bande 53,
- A 2500 MHz, les bandes 41, n41, n90,
- A 2600 MHz, les bandes 7, 38, 69, n7, n38,
- A 3300 MHz, les bandes 52,n77,n78,
- A 3400 MHz, les bandes 42, n77, n78,
- A 3500 MHz, les bandes 42, 48, 49, n48, n77, n78,
- A 3600 MHz, les bandes 43, 48, 49, n48, n77, n78,
- A 3700 MHz, les bandes 43, n77, n78,
- De 3800 MHz à 4200 MHz, la bande n77,
- De 4400 MHz à 5000 MHz, la bande n79.

Avantageusement, la seconde interface comporte :
- un équipement antennaire de type « dual band » apte à recevoir en Wi-fi un débit de données supérieur à 500 mégabits par seconde,
- un équipement radio supportant un débit descendant de données supérieur ou égal à 500 mégabits par seconde,
- un routeur supportant un débit descendant de données supérieur ou égal à 500 mégabits par seconde et présentant un port Ethernet supportant un débit descendant supérieur ou égal à 1 gigabit par seconde, de préférence supérieur à 10 gigabits par seconde.

Ainsi, chacun des éléments composant la deuxième interface est capable d'extraire de l'ultra haut débit depuis la première unité, et de transmettre en ultra haut-débit ces données à un terminal d'un utilisateur, tel qu'un ordinateur, situé dans l'espace intérieur.

Cet agencement permet donc une transmission en ultra haut débit, en particulier un débit d'au moins 500 mégabits par seconde au moins en liaison descendante, depuis l'extérieur vers l'intérieur d'un local ou d'une résidence.

De préférence, au moins une des unités comprend un serveur dynamique de distribution d'adresses IP.

Ainsi, il est possible de connecter très facilement un dispositif possédant une interface de communication de type LAN (de l'anglais « Local Area Network » et qui signifie « réseau local ») sans requérir de configuration complexe, et de bénéficier alors de façon simple du système de transmission de données opérant comme une passerelle entre le réseau distant (par exemple un réseau de télécommunications de type 4G ou 5G) et un réseau local de type domestique, interne à un local ou à un domicile (par exemple un réseau local sans-fil WiFi).

Avantageusement, au moins l'une des unités présente un volume total inférieur ou égal à 1200 centimètres cubes.

Ainsi, les deux unités peuvent présenter des dimensions n'excédant pas 15*15*5 centimètres, de manière à optimiser leur discrétion et à faciliter leur installation. Chaque unité peut ainsi facilement être retirée et déplacée, le système est donc particulièrement nomade.

De préférence, l'ouvrant forme une fenêtre d'habitation.

En effet, l'invention est particulièrement adaptée aux fenêtres. Généralement, au sein d'une fenêtre, un joint d'isolation souple sépare l'ouvrant du dormant au niveau de l'axe de rotation de l'ouvrant, de sorte que les moyens filaires de l'invention peuvent être placés à cet endroit. En position fermée, ces moyens écrasent le joint souple sans gêner la fermeture ou l'ouverture de la fenêtre, en restant discrets, tout en conservant l'isolation de la fenêtre. En outre, les fenêtres sont généralement de plus faible épaisseur que les murs, ce qui permet par exemple d'utiliser des aimants en néodyme pour fixer les unités de part et d'autre de la fenêtre.

On peut par ailleurs prévoir l'épaisseur maximale de la plupart des fenêtres de façon à dimensionner les aimants de façon à ce qu'ils fonctionnent même dans ce cas et donc dans tous les cas. En particulier, on peut prévoir des logements d'aimant comprenant une première partie dimensionnée pour maintenir en position un aimant principal qui conviendra pour la plupart des parois. Une deuxième partie du logement est dimensionnée pour accueillir un ou plusieurs aimants additionnels dans le cas où l'épaisseur de la fenêtre est plus importante que la normale.

Enfin, généralement, les fenêtres séparent un local intérieur d'un espace extérieur dépourvu d'obstacle proche, ce qui est permet une bonne transmission de données entre une station radio et une unité de l'invention située sur la surface extérieure de la fenêtre.

On prévoit également selon l'invention un procédé d'installation d'un système de transmission de données tel que décrit précédemment, dans lequel, la paroi présentant un joint souple entre l'ouvrant et le fermant, on étend les moyens de transmission de données et les moyens de connexion électrique à travers la paroi entre l'ouvrant et le joint, de sorte que, une fois étendus, les moyens de transmission de données et les moyens de connexion électrique ne gênent ni une ouverture ni une fermeture de l'ouvrant.

En effet, certaines parois comprenant un ouvrant articulé sur un dormant, telles que la plupart des fenêtres, présentent un joint d'isolation souple entre le bâti de la fenêtre et l'axe de rotation de la fenêtre, le long de cet axe. L'installation du système prévoit donc l'utilisation de cet espace, en comprimant le joint souple pour y faire passer les moyens de transmission et de connexion entre les deux unités, de préférence sous la forme d'un seul câble Ethernet plat et de petites dimensions.

Avantageusement, la paroi séparant un espace extérieur d'un espace intérieur,
- on fixe la première unité à une surface de la paroi orientée vers l'espace extérieur,
- on fixe la seconde unité à une surface de la paroi orientée vers l'espace extérieur, et
- on connecte la seconde unité à une source d'alimentation électrique située dans l'espace intérieur.

Ainsi, c'est grâce à l'alimentation de l'unité située à l'intérieur qu'est alimentée l'unité située à l'extérieur via les moyens de connexion électrique entre les deux unités.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est un schéma d'un mode de réalisation de l'invention ;
[Fig. 2] la figure 2 est une illustration d'un système selon un mode de réalisation de l'invention installé sur une fenêtre ;
[Fig. 3] la figure 3 est une illustration d'un procédé d'installation selon un mode de mise en œuvre de l'invention ;
[Fig. 4] la figure 4 est un schéma d'un système de fixation selon un mode de réalisation de l'invention ;
[Fig. 5] la figure 5 est un schéma d'un logement d'aimant vide de la figure 4;
[Fig. 6] la figure 6 est un schéma du logement de la figure 5 comprenant un aimant;
[Fig. 7] la figure 7 est un schéma du logement de la figure 5 comprenant deux aimants;
[Fig. 8] la figure 8 est schéma un du logement de la figure 5 comprenant trois aimants;
[Fig. 9] la figure 9 est un schéma du logement de la figure 5 comprenant un aimant et un support d'aimant.

### Description détaillée

Dans la suite, la description portera sur un mode particulier de réalisation de l'invention, celui de la transmission de données à travers une fenêtre d'habitation. Or, l'invention est bien entendu généralisable à tout type de paroi comprenant un ouvrant articulé sur un dormant.

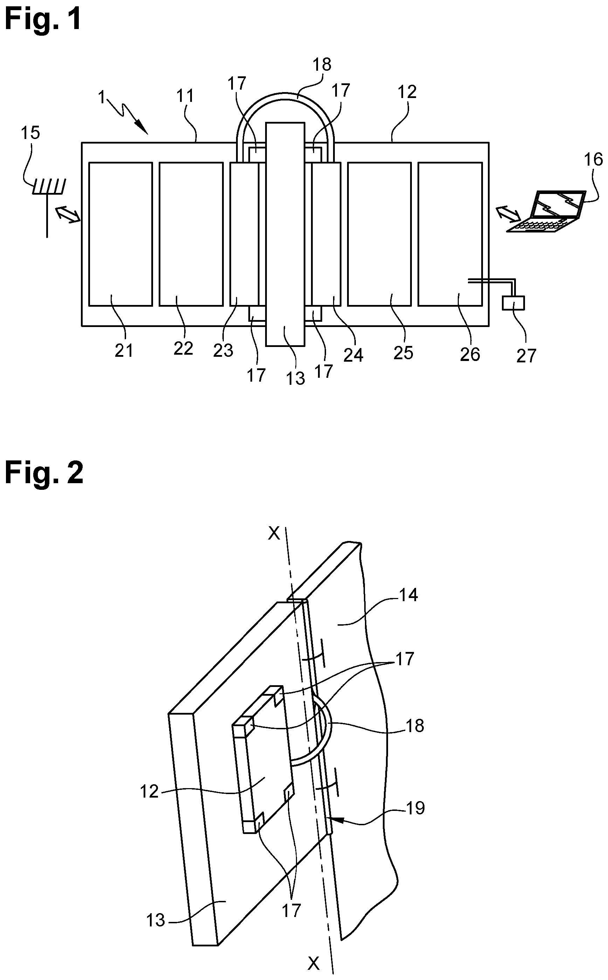

On a représenté sur la figure 1 un schéma d'un mode de réalisation de l'invention, dont certains éléments sont illustrés également à la figure 2. Ce système 1 de transmission de données comprend deux unités de transmission de données 11 et 12. Ces unités 11 et 12 présentent des boitiers respectifs situés de part et d'autre d'une fenêtre 13. Cette fenêtre 13 illustrée à la figure 2 présente une paroi transparente et peut être ouverte par rotation autour d'un axe X, au niveau duquel elle est montée à un mur 14. Elle comprend donc un ouvrant 13 et un dormant, le mur 14. Ce mur 14 sépare l'intérieur d'un local professionnel de l'extérieur. L'unité 11 de transmission de donnée est ainsi placée du côté de la fenêtre 13 situé à l'extérieur et est en liaison sans fil avec une station radio 15 appartenant à un réseau mobile. L'unité 12 est situé sur la paroi opposée de la fenêtre, donc dans l'espace intérieur du local professionnel. Elle est en contact sans fil avec un terminal 16, tel qu'un ordinateur. Ce système 11 permet de transmettre des données depuis la station 15, située à l'extérieur, jusqu'à l'ordinateur 16 situé en l'intérieur, et ce à un débit supérieur ou égal de 1 gigabit par seconde en liaison descendante. En liaison montante, le débit est supérieur ou égal à 100 mégabits par seconde.

Nous allons tout d'abord décrire l'assemblage des unités 11 à 12 l'une à l'autre de part et d'autre de la fenêtre 13. Puis nous décrirons chaque composant de chaque unité en expliquant comment l'ultra haut débit est atteint depuis la station 15 jusqu'à l'ordinateur 16.

Chaque unité présente un équipement antennaire, un équipement radio et un routeur. Dans la suite, on entend par « équipement antennaire » une ou plusieurs antennes, éventuellement associées à des éléments de configuration ou de connexion. On entend par « équipement radio » un modem, ou un équipement aux fonctions similaires, éventuellement associé à des éléments de configuration ou de connexion. L'ensemble de ces trois éléments tient dans un boitier (chaque unité 11 ou 12) dont les dimensions sont de 15 centimètres de hauteur, 15 centimètres de largeur et 5 centimètres de profondeur. Une unité fait donc 1 125 cm3. Le fait qu'une unité ne dépasse pas 1 200 cm3 rend ce système particulièrement facile à manipuler, chaque unité étant simple à installer. Les 5 centimètres de profondeur permettent également aux unités 11 et 12 d'être fixées à la fenêtre sans gêner d'éventuels volets. En effet, en moyenne, la distance entre un volet et un bâti de fenêtre est d'environ 5 cm et dans les mauvais cas de 3 cm. Gardons donc ce chiffre maximal de 3 cm entre le bâti et le volet. La distance entre le bati et la surface d'une fenêtre, c'est-à-dire l'épaisseur du bâti extérieur, est généralement égal à l'épaisseur de la fenêtre divisé par deux, auquel il convient d'ajouter environ 2 cm. Ainsi, dans le pire des cas, la distance entre la fenêtre et son volet est de 2+3 = 5 cm. C'est pourquoi il est avantageux que la profondeur des unités, au moins celle de l'unité extérieur 11, soit de 5 centimètres.

Grâce à ce faible volume, le système 1 est donc particulièrement nomade, d'autant qu'il se passe de système complexe de fixation ou d'opération difficile d'installation.

En effet, pour fixer les unités 11 et 12 de part et d'autre de la fenêtre 13, on utilise des aimants en néodyme 17, chaque unité présentant quatre aimants 17, placés aux quatre coins de l'unité 12 sur la figure 2 et bien sûr de la même manière sur l'unité 11 (non illustrée). On les place en particulier à l'intérieur de l'unité, séparés de la fenêtre par un capot (non illustré) de l'unité clipsé ou vissé sur l'unité. En plaçant les unités 11 et 12 l'une en face de l'autre de part et d'autre de la paroi 13, les aimants en néodyme 17, attirés l'un par l'autre, serrent les unités 11 et 12 contre les parois respectives de la fenêtre 13. Ainsi, les aimants 17 permettent de fixer facilement ces unités 11 et 12 autour de la fenêtre 13, sans avoir besoin de percer des trous dans un mur, d'utiliser du collage, du vissage, ou d'installer un système compliqué de fixation. Leur retrait en est également facilité.

De manière générale, les aimants 17 sont conçus et dimensionnés de manière à fixer les unités 11 à 12 l'une à l'autre à travers une fenêtre dont l'épaisseur de la paroi serait de 30 millimètres environ. En effet, les vitrages simples ont généralement une épaisseur de 4 à 6 millimètres, mais une grande majorité de fenêtres à double vitrage présente une épaisseur de 24 millimètres (deux couches de verre de 4 millimètres séparées par une couche de vide de 16 millimètres) ou de 28 millimètres (deux couches de verres de 4 millimètres séparées par une couche de vide de 20 millimètres). Les aimants 17 sont donc prévus pour fixer les unités 11 et 12 l'une à l'autre de façon convenable, même dans le pire cas c'est-à-dire quand l'épaisseur de la fenêtre est de l'ordre de 30 millimètres.

En particulier, on peut prévoir, dans un premier mode de fixation, des aimants en néodyme cylindriques de révolution de 20 millimètres de diamètre et 4 centimètres de hauteur. En outre, pour renforcer l'adhérence des unités 11 et 12 sur la fenêtre 13, des patins plastiques anti-dérapants (non illustrés) peuvent être placés au droit de chaque aimant 17 sur les unités, c'est-à-dire aux quatre coins du capot de l'unité, entre le capot et la fenêtre. Bien entendu, les aimants pourraient être d'un autre type. De manière générale, les moyens de fixation pourraient être différents.

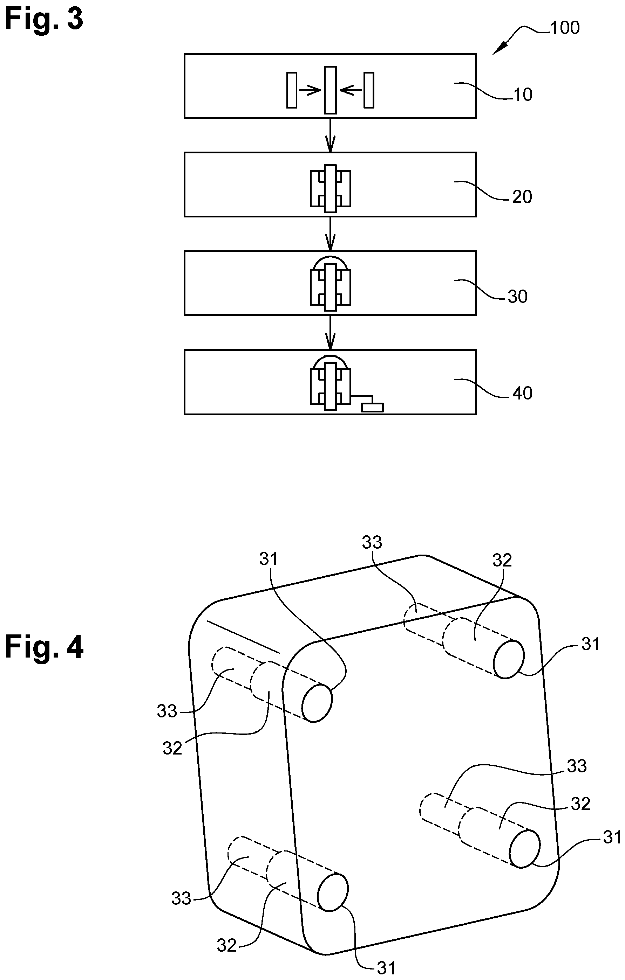

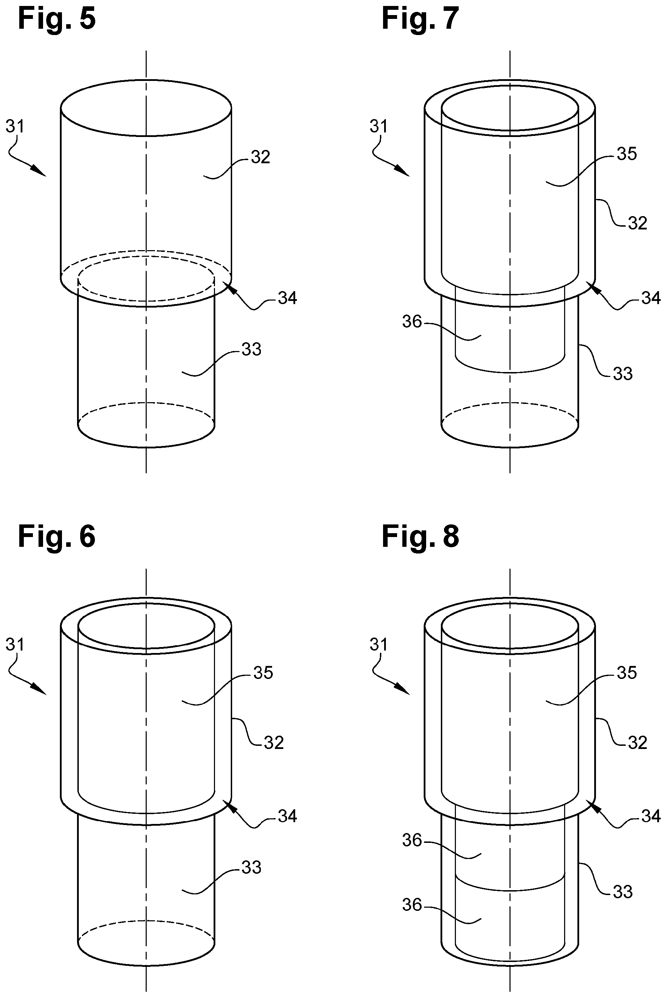

On va maintenant décrire un deuxième mode de fixation par aimant en référence aux figures 4 à 9, dans lequel le niveau d'attraction par aimantation peut être ajusté afin que la force d'adhérence des unités reste convenable pour toute paroi ou épaisseur de paroi. En particulier, cette force doit fournir un bon compromis entre fiabilité de la fixation et facilité de la manipulation des équipements pour les repositionner. Dans ce mode, des logements 31 sont formés aux quatre coins de chaque unité 11 et 12. La figure 4 illustre ainsi schématiquement les quatre logements 31 de l'une quelconque de ces unités dépourvue de capot, de sorte que l'on observe sur ce schéma l'entrée de chaque logement ainsi que son étendue dans l'unité en pointillé. Les logements 31 sont cylindriques de révolution et comprennent chacun deux parties. La première partie 32 présente un diamètre égal à 20 mm et une profondeur ou hauteur de 20 mm également. Cette partie 32 affleure au niveau de l'ouverture du logement 31, c'est cette partie du logement qui est donc destinée à être la plus proche de la fenêtre 13 ou de n'importe quelle paroi lors de la fixation de l'unité. La deuxième partie 33 est située dans le prolongement de la partie 32 et de façon coaxiale. Sa hauteur est également de 20 millimètres. En revanche, son diamètre est plus faible, il est de 19 mm. Cette différence de diamètre entre les parties 32 et 33 engendre la présence d'un épaulement 34 à la frontière entre les deux parties du logement 31. Ce logement 31 est illustré vide aux figures 4 et 5. Mais pour fixer les unités l'une à l'autre de part et d'autre de la fenêtre 13, chacun des quatre logements de ces deux unités loge au moins un aimant, les quatre aimants se faisant face deux à deux. La forme des logements 31 permet d'y loger également des aimants additionnels si nécessaire, en fonction du niveau d'aimantation souhaité. Nous allons ci-après décrire certaines de ces variantes.

La figure 6 illustre ainsi le cas d'un aimant 35 logé dans la première partie 32 du logement 31. L'aimant 35 est dimensionné de façon à entrer en butée contre l'épaulement 34 d'un côté et à affleurer à l'ouverture du logement 33 de l'autre, il mesure donc 20 millimètres de hauteur pour un diamètre de 20 millimètres. Comme dans les variantes suivantes et comme indiqué plus haut, l'aimant affleurant à l'ouverture du logement n'est pas en contact direct avec la paroi, un capot étant fixé sur l'unité par clipsage ou vissage. De l'autre côté de l'aimant, la partie 33 du logement, elle, reste vide dans cette variante. Placer un aimant 35 par logement 31 aux quatre coins de chaque unité convient à la fixation de ces unités de part et d'autre d'une fenêtre de 24 millimètres d'épaisseur. En effet, l'attraction mutuelle exercée par ces huit aimants pour une fenêtre de 24 millimètres engendre une force d'adhérence de 6 Newtons.

Dans une autre variante illustrée à la figure 7, chaque logement 31 est muni d'un aimant 36 en plus de l'aimant 35. Cet aimant 36 mesure 10 millimètres de hauteur et 19 millimètres de diamètre de manière à pouvoir être inséré dans la deuxième partie 33 du logement 31. Ainsi, lors de l'assemblage de l'unité, le capot étant retiré, on insère l'ensemble formé de l'aimant 35 et de l'aimant 36, qu'on aura préalablement aimantés l'un à l'autre de façon coaxiale, au sein du logement 31. L'aimant 36 va prendre place dans la deuxième partie 33 tout en laissant un espace vide et en restant fixé par aimantation à l'aimant 35, qui lui reste étendu dans la partie 32 entre l'épaulement 34 d'un côté et le capot de l'autre lorsque ce dernier est ensuite fixé sur l'unité. L'attraction mutuelle exercée par ces huit assemblages de part et d'autre d'une fenêtre de 24 millimètres engendre une force d'adhérence de 8 Newtons. Autour d'une fenêtre de 27 millimètres, la force d'adhérence est de 6 Newtons.

La figure 8 illustre un assemblage de trois aimants dans le logement 31, comprenant un aimant 35 dans la partie 32 et deux aimants 36 dans la partie 33. Mis bout à bout, ces derniers complètent l'espace de la partie 33 de sorte que l'ensemble du logement 31 est rempli d'aimants. La force d'adhérence générée par quatre assemblages de ce type de part et d'autre d'une fenêtre de 24 millimètres est de 9 Newtons, et de 6 Newtons pour un vitrage de 29 millimètres.

Ainsi, le logement 31 permet l'intégration de plusieurs assemblages d'aimants distincts de façon à choisir le niveau d'aimantation désiré, en fonction notamment de l'épaisseur de la fenêtre ou du type de paroi concerné. Une force d'adhérence de 6 Newtons est avantageuse dans la mesure où elle fournit un bon compromis entre un solide maintien en position sur la paroi et une facilité de manipulation pour modifier la position des unités si nécessaire.

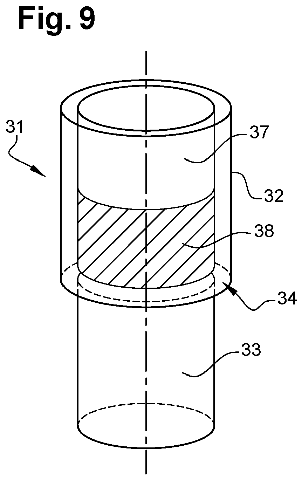

A l'inverse des variantes précédemment décrites, il est également possible de diminuer la force d'adhérence par rapport à celle d'un seul aimant 35 par logement 31. La figure 9 illustre ainsi une variante où un aimant 37, de 20 millimètres de diamètre mais de 10 millimètres seulement de hauteur, est inséré dans le logement 31. De façon à ce qu'il affleure au plus près du capot et donc de la fenêtre, un support 38 prenant la forme d'un cylindre creux en plastique de 10 millimètres de hauteur et 20 millimètres de diamètre est inséré en amont dans le logement. A eux deux, le support 38 et l'aimant 37 complètent la partie 32 du logement 31, la partie 33 restant vide. Dans cette variante, la force d'adhérence générée par attraction mutuelle, pour huit assemblages de ce type à raison de quatre par unité de part et d'autre de la paroi, est de 30 Newtons pour un simple vitrage de 6 millimètres. En réduisant la hauteur de l'aimant à 3 millimètres et donc en augmentant celle du support à 17 millimètres, on retrouve une force de 7 Newtons convenant bien à l'invention.

Le logement de l'invention n'est pas limité par les variantes décrites ci-avant. En particulier, il est possible de fournir un logement aux dimensions différentes, voire avec plus de deux parties et donc au moins deux épaulements en son sein. De même, on peut saucissonner de manière illimitée les aimants à y insérer, de façon à ajuster de manière très précise la force d'adhérence désirée.

Les autres éléments des unités décrits ci-après sont naturellement compatibles avec l'ensemble des variantes d'aimantation, ainsi que de manière générale avec tout type de fixation des unités.

Les unités 11 et 12 comprennent des moyens de transmission des données l'une à l'autre, et des moyens de connexion électrique. Dans le mode de réalisation illustré aux figures 1 et 2, ces moyens sont communs. En effet, ils passent par un câble 18 Ethernet plat, court, en l'espèce de 25 centimètres, de catégorie 7, faisant 2 millimètres d'épaisseur. Il pourrait s'agir d'un autre type de câble, par exemple d'un câble de catégorie 7e blindé ou tout type de câble inférieur ou égal à 2 millimètres d'épaisseur permettant le « PoE » (« Power over Ethernet » ou « alimentation électrique par câble Ethernet » en français), comme nous y reviendrons plus bas. De manière générale, il est avantageux que l'épaisseur du câble soit au plus de 3 millimètres de façon à pouvoir être inséré dans la majorité des interstices situés entre les fenêtres et leur bâti, comme nous le décrirons plus bas également. La proximité des unités 11 et 12 grâce à l'épaisseur de la fenêtre, faible relativement à celle d'un mur, permet d'utiliser un câble particulièrement court, qui pourrait par exemple aller jusqu'à 50 centimètres.

Faisant usage de la technologie « PoE » de type 802.3af/at/bt, ce câble 18 permet à la fois de transmettre les données à ultra haut débit, c'est-à-dire à un débit supérieur 500 mégabits par seconde, ici supérieur ou égal à 1 gigabit par seconde, et de transmettre également un courant électrique d'environ 15 Watts de puissance. Disponible dans le commerce, l'utilisation du « PoE », en alternative à la recharge sans fil à travers la fenêtre, permet à l'unité intérieure 12 d'alimenter en électricité l'unité extérieure 11 même en cas de forte épaisseur de la fenêtre 13, d'éviter un échauffement de la fenêtre trop important et une perte d'énergie élevée. Cette technologie est bien connue de l'homme du métier de sorte que nous ne la décrirons pas plus en détails.

Par ailleurs, cette connexion électrique est nécessaire à l'unité extérieure 11. En effet, seule l'unité 12, située en intérieur, est connectée à une source électrique 27 par le biais de son routeur 24. En l'espèce, cette source 27 est un chargeur externe de type 12V-58 V DC. L'unité 12 comprend également un transformateur AC/DC de manière à alimenter le routeur 24 en tension continue. C'est donc l'unité 12 qui alimente en électricité, par le câble 18, l'unité 11 située sur la paroi extérieure. La tension aux bornes du routeur 23 de l'unité 11 dépend du type de « PoE » utilisé : en cas de « PoE » passif, la tension aux bornes du routeur 23 est déterminée par un convertisseur de tension pour convertir la tension fournie au routeur 24 en celle adaptée au routeur 23. En cas de « PoE » actif, le convertisseur de tension n'est pas nécessaire.

Mais comment placer le câble 18 utilisant le « PoE » ? Comme évoqué plus haut, l'invention tire parti d'un jeu entre la grande majorité des fenêtres et les bâtis auxquels elles sont reliées, au niveau de leur axe de rotation. Ce jeu est généralement comblé par un joint d'isolation. Dans le mode de réalisation illustré à la figure 2, ce jeu est rempli par un joint d'isolation 19 au niveau de l'axe de rotation X de la fenêtre 13 vis-à-vis du mur 14. Ce joint souple 19 vise à combler ce jeu en isolant la fenêtre 13. Or, le câble plat 18, de 2 millimètres d'épaisseur, est apte à être inséré entre la fenêtre 13 et le joint souple 19, lorsque la fenêtre 13 est ouverte. Il peut donc connecter l'unité 11 à l'unité 12, et vice versa, pour transmettre les données à ultra haut débit et le courant électrique. Lorsque la fenêtre 13 est fermée, le câble 18 écrase le joint 19, ce qui ne pose pas de problème puisque ce dernier est souple. Les moyens de transmission de données et de connexion électrique ne sont donc pas contraignants et restent discrets. Ils peuvent par ailleurs être retirés facilement, puisqu'il suffit de retirer le câble 18.

Nous allons maintenant décrire les éléments constituant chaque unité en décrivant simultanément la transmission des données le long de ce système 1, en partant de la station 15, qui communique avec l'unité extérieure 11. Cette station 15 appartient à un réseau de type 4G, mais elle pourrait également appartenir à un réseau de type 4G+, 5G ou tout type d'autre réseau de données apte à délivrer un débit minimal de 500 mégabits par seconde. L'unité extérieure 11 présente un équipement antennaire 21 qui a pour but d'extraire au moins 1 gigabit par seconde de données depuis la station 15. Plutôt que d'équipement antennaire, on pourrait aussi parler d'interface de transmission sans fil. Pour atteindre ce débit d'extraction, l'équipement antennaire 21 comprend une antenne plate, dont les dimensions sont de 10*10 centimètres. Elle est de type « large bande », et couvre un gain minimal de 6 dBi pour l'ensemble des fréquences inférieures à 6 GHz et utilisées par les réseaux mobiles. Au sein de l'unité 11, cet équipement 21 est connecté à un équipement radio 22, qui est un modem. La connexion entre l'équipement 21 et le modem 22 est réalisée par un câble coaxial. Ce modem est capable de contrôler les caractéristiques (fréquence d'opération, polarisation, diagramme de rayonnement, inclinaison, etc.) de l'antenne 21. Ce modem 22 est un modem LTE-A de type catégorie 18, à 1,2 Gigabits par seconde. Il pourrait également s'agir d'un modem LTE-A de catégorie 20 (2 Gigabits par seconde), d'un modem 5G-NR ou d'un modem équivalent. En interfaçant l'équipement antennaire 21 avec ce modem 22, l'unité 11 est capable d'extraire au moins 1 gigabit par seconde de données depuis le réseau 15. A fortiori, elle est bien sûr capable d'extraire 500 mégabits par seconde. Ces données sont transmises, par liaison Ethernet (mais il pourrait s'agir d'une liaison USB ou d'un bus interne) à un routeur 23 qui doit être capable de traiter des données reçues à ce débit élevé. A cet effet, ce routeur 23 présente un processus double-cœur avec une fréquence de traitement supérieure à 800 MHz, il dispose d'un modem, et d'un port Ethernet de type 10 gigabits par seconde. Pour un débit de l'ordre de 500 mégabits par seconde, un port de type 1 gigabits suffirait. En outre, il dispose de fonctions de routage IP permettant la connexion à une ou plusieurs autres unités, en l'espèce à l'unité intérieure 12. De cette manière, la transmission à un débit supérieur à 1 gigabit par seconde, a fortiori supérieur à 500 mégabits ou 750 mégabits par seconde, est assurée depuis le réseau 15 jusqu'au routeur 23 qui est apte à traiter ce débit.

Ensuite, il convient de transmettre ces données, toujours à ultra haut débit, à l'unité 12 située dans le local intérieur, et donc placée de l'autre côté de la paroi de la fenêtre 13. Pour ce faire, les données sont transmises par le câble Ethernet 18, passant dans l'interstice situé entre la fenêtre 13 et le joint d'isolation 19, et qui fait circuler les données à un débit supérieur à 1 gigabit par seconde à l'unité 12.

Au sein de l'unité intérieure 12, c'est un routeur 24 qui récupère les données transmises par le câble 18. Il est à noter que le routeur 24 de cette unité 11 comme le routeur 23 de l'unité intérieure 12 dispose bien sûr d'un port PoE pour transmettre et extraire le débit et le courant électrique du câble 18. Les caractéristiques du routeur 24 sont identiques à celles du routeur 23 de l'unité extérieure 11. Elles pourraient bien entendu être supérieures en termes de performance. Le routeur 24 transmet ainsi les données, par liaison Ethernet (mais il pourrait s'agir d'une liaison USB ou d'un bus interne), à ultra haut-débit à un équipement radio, ou modem 25. Ce modem 25 est de type 802.11ac double-radio MIMO 3*3, triple radio MIMO 2*2, 802.11ax ou équivalent, de manière à faire circuler les données à ultra haut-débit. Ce modem 25 transmet ces données à un équipement antennaire 26 via un câble coaxial. Ce système antennaire 26 est de type « dual band » pour permettre d'atteindre des débits Wifi supérieurs au gigabit par seconde. En effet, c'est via Wifi que les données sont transmises, par l'équipement antennaire 26, à l'ordinateur 16 situé dans l'espace intérieur. Les caractéristiques de l'antenne 26 ne sont pas nécessairement déterminées par le modem 25 et peuvent être fixées à la fabrication. Pour garantir sa discrétion, des techniques de type LDS (« Laser Direct Structuring ») peuvent être utilisées pour la fabriquer.

Ainsi, les données issues du réseau mobile 15 sont transmises à ultra haut débit jusqu'à l'ordinateur 16, c'est-à-dire à un débit supérieur à 500 mégabits par seconde, à mais surtout supérieur à 1 gigabit par seconde quand le réseau mobile issu de l'antenne 15 le permet, les éléments du système 1 étant tous choisis précisément pour supporter un tel débit. Dans le sens inverse, c'est-à-dire en liaison montante, le débit peut être plus faible, par exemple de l'ordre de 100 mégabits par seconde.

On va maintenant décrire un procédé d'installation 100 du système 1, en référence à la figure 3. A l'étape 10, un installateur place les deux unités 11 et 12 de part et d'autre de la fenêtre 13. Pour optimiser la transmission des signaux, il est avantageux de situer l'unité extérieure 11 sur une fenêtre 13 orientée de telle sorte qu'aucun obstacle ne s'oppose à la transmission des ondes depuis la station radio 15 vers l'unité 11. Au sujet de l'unité intérieure 12, il est là aussi avantageux de la placer dans un espace le plus possible ouvert, ou en hauteur, de manière à couvrir cette fois au mieux l'espace intérieur et en particulier le terminal 16. A l'étape 20, l'installateur fixe les unités 11 et 12 l'une à l'autre au moyen des aimants 17 de façon à ce que les unités 11 et 12 soient fixées l'une à l'autre en serrant la paroi de la fenêtre 13, les aimants 17 s'attirant à travers la paroi. Si l'une variante décrite plus haut en rapport avec les aimants est mise en œuvre, une étape préalable de choix des aimants a lieu pour adapter l'aimantation en fonction de l'épaisseur de la fenêtre. Il est même possible de tester plusieurs assemblages d'aimants pour choisir la force d'adhérence convenable.

A l'étape 30, l'installateur connecte le câble 18 entre les deux unités. A cet effet, il branche une extrémité du câble 18 à l'une des unités, ouvre la fenêtre 13, et passe le câble entre la fenêtre 13 et le joint d'isolation 19 de cette fenêtre, afin de brancher l'autre extrémité du câble 18 à l'autre unité. Puis il referme de la fenêtre, le câble 18 écrasant le joint d'isolation souple 19 sans gêner la fermeture ou l'ouverture de la fenêtre. Enfin, à l'étape 40, l'installateur branche l'unité intérieure 12 à la source électrique 27, de manière à ce que l'ensemble du système 1, et notamment l'unité 11 par le câble 18, puisse être alimenté en électricité.

L'invention n'est pas limitée aux modes de réalisation présentés et d'autres modes de réalisation apparaîtront clairement à l'homme du métier. L'ensemble des éléments décrits permet un débit descendant supérieur ou égal à 1 gigabit par seconde en liaison, et supérieur ou égal à 100 mégabits par seconde en liaison ascendante. Les équipements antennaires, radio et les routeurs mentionnés et permettant ce débit se trouvent dans le commerce. Par définition, ils permettent également un débit inférieur, en particulier de l'ordre de 500 mégabits par seconde ou de 750 mégabits par seconde en liaison descendante.

Il est possible de faire varier les caractéristiques des composants des unités, à la condition bien sûr que ces éléments permettent de faire circuler les données à ultra haut débit.

Enfin, on a décrit un mode de réalisation de l'invention adapté à une fenêtre. Cependant, le système 1 de transmission de données décrit peut être installé sur tout type de paroi comportant un ouvrant articulé sur un dormant. En effet, il comprend une première unité 11 et une seconde unité 12 de transmission de données, destinées à être disposées respectivement de part et d'autre de la paroi, quelle que soit la nature de la paroi. Il comprend également des moyens 18 filaires de transmission de données entre les deux unités 11 et 12, qui sont destinés à s'étendre à travers la paroi en passant entre l'ouvrant et le dormant pour transmettre des données d'une des unités à l'autre à un débit supérieur ou égal à 500 mégabits par seconde. Enfin, le système 1 comprend des moyens filaires 18 de connexion électrique entre les deux unités 11 et 12, destinés également à s'étendre à travers la paroi en passant entre l'ouvrant et le dormant pour transmettre un courant électrique d'une des unités à l'autre. En particulier, il est avantageux de faire passer tous ces moyens filaires entre le dormant et l'ouvrant au niveau de l'axe de rotation de l'ouvrant vis-à-vis du dormant.

Ces caractéristiques ne dépendent donc pas du type de paroi, de sorte que le système peut être installé sur des parois autres que des fenêtres.

De même, selon le procédé d'installation décrit, la paroi sur lequel le système est installé présente un joint souple 19 entre l'ouvrant et le fermant, et on étend à l'étape 40 les moyens de transmission 18 de données et les moyens 18 de connexion électrique à travers la paroi entre l'ouvrant et le joint 19, de sorte que, une fois étendus, les moyens de transmission 18 de données et les moyens de connexion 18 électrique ne gênent ni une ouverture ni une fermeture de l'ouvrant. Là-aussi, ce procédé est donc adaptable à toute paroi comprenant un ouvrant articulé sur un dormant et un joint souple situé entre l'ouvrant et le dormant, en particulier au niveau de l'axe de rotation de l'ouvrant sur le dormant.

Dans un autre mode de réalisation non illustré, le système comprend un support de fixation placé contre la surface intérieure de la paroi, en lieu et place de l'unité intérieure. Il vise à fixer l'unité extérieure à la paroi par attraction mutuelle grâce aux systèmes d'aimants décrits plus haut. En particulier, ce support est muni de quatre logements 31 ou équivalents, il peut s'agir d'un quadripode sans autre élément que ces quatre logements. De cette manière, l'unité intérieure, elle, peut être placée n'importe où à l'intérieur du logement, et reliée par un câble plat long à l'unité extérieure. En d'autres termes, dans ce mode de réalisation, l'unité extérieure est agencée de la même manière que dans les modes précédemment décrits, mais au lieu d'être fixé par attraction mutuelle avec l'unité intérieure de part et d'autre de la paroi, elle est fixée par attraction mutuelle avec un quadripode servant uniquement de support de fixation. Ce mode est avantageux dans les cas où il serait indispensable de disposer l'unité intérieure à un autre endroit que la fenêtre, par exemple au niveau d'un plafond ou à une position centrale d'une pièce.

Dans une variante de ce mode, le quadripode dispose d'un module Wifi, faisant de lui une unité intérieure de transmission de données.

Dans un autre mode de réalisation non illustré, le système comprend un plateau visant à recréer une épaisseur artificielle de paroi. Ainsi, en cas de paroi trop faible pour l'aimantation générée, la force d'adhérence des unités risque d'être trop importante, générant des claquements voire brisant une fenêtre. En outre, il peut être difficile de manipuler l'unité si elle est trop fortement attirée vers la paroi. Afin de diminuer cette force, le plateau est intercalé entre l'une des unités et la paroi, de manière à augmenter artificiellement l'épaisseur de cette paroi et la distance entre les deux unités. Il s'agit d'une alternative à la variante à la figure 9 décrite plus haut pour diminuer la force d'adhérence.

Dans une variante de ce mode, le plateau fait entièrement office de paroi, en l'absence totale de fenêtre ou d'autre paroi. Ainsi, l'unité intérieure et l'unité extérieure sont fixées de part et d'autre du plateau, formant un ensemble qui peut être posé sur n'importe quelle surface horizontale. Cet agencement est avantageux dans le cas où la paroi ou fenêtre habituelle ne serait plus disponible. Par exemple, en cas d'événement provisoire dans une tente extérieure où une connexion internet est nécessaire, les unités habituellement placées sur une fenêtre du domicile sont déplacées, fixées de part et d'autre du plateau, l'ensemble étant placé dans la tente. Le système complet est alors agencé d'un seul tenant.

## Revendications

1. Système (1) de transmission de données à travers une paroi comportant un ouvrant (13) articulé sur un dormant (14), le système (1) comprenant :
- une première unité (11) et une seconde unité (12) de transmission de données,
- des moyens filaires (18) de transmission de données entre les deux unités (11, 12), destinés à s'étendre à travers la paroi en passant entre l'ouvrant (13) et le dormant (14) pour transmettre des données d'une des unités (12) à l'autre (11),
- des moyens filaires (18) de connexion électrique entre les deux unités (11, 12), destinés à s'étendre à travers la paroi en passant entre l'ouvrant (13) et le dormant (14) pour transmettre un courant électrique d'une (12) des unités à l'autre (11),
le système étant **caractérisé en ce que** :
- la première unité (11) et la seconde unité (12) sont destinées à être disposées sur la paroi respectivement de part et d'autre de la paroi, le système comprenant des aimants (17 ; 35, 36, 37) coopérant par attraction de façon à fixer la première unité (11) et la seconde unité (12) respectivement de part et d'autre de la paroi par serrage de la paroi entre ces unités ;
- les moyens filaires (18) de transmission entre les deux unités (11, 12) sont aptes à transmettre les données à un débit supérieur ou égal à 500 mégabits par seconde.

2. Système (1) selon la revendication précédente, dans lequel les moyens filaires (18) de transmission de données et/ou de connexion électrique présentent une forme générale plane de façon à pouvoir s'étendre entre les surfaces jointives complémentaires de l'ouvrant (13) et du dormant (14) lorsque l'ouvrant (13) est en position fermée sur le dormant (14).

3. Système (1) selon l'une quelconque des revendications précédentes, dans lequel les moyens de transmission filaire (18) de données et les moyens de connexion électrique filaire (18) comprennent un câble Ethernet (18) commun apte à la fois à transmettre les données à un débit supérieur ou égal à 500 mégabits par seconde et à transmettre le courant.

4. Système (1) selon l'une quelconque des revendications précédentes, dans lequel les moyens filaires (18) de transmission de données sont aptes à transmettre les données à un débit supérieur ou égal à 750 mégabits par seconde, de préférence supérieur ou égal à 1 gigabit par seconde.

5. Système (1) selon l'une quelconque des revendications précédentes, dans lequel l'un des aimants (35) étant un aimant principal, au moins l'une des unités présente un logement (31) d'aimant, le logement comprenant un épaulement (34) de positionnement de l'aimant principal (35), l'épaulement séparant une première partie (32) du logement (31) destiné à loger l'aimant principal (35) d'une deuxième partie (33) du logement (31) pouvant servir à loger si nécessaire un ou plusieurs aimants additionnels (36, 37).

6. Système (1) selon la revendication précédente, dans lequel l'aimant principal (35), le ou les aimants additionnels (36, 37) et le logement (31) présentent une forme générale cylindrique de révolution, la première partie (32) ayant un premier diamètre, la deuxième partie (33) ayant un deuxième diamètre plus petit que le premier diamètre, la deuxième partie (33) étant coaxiale à la première partie (32).

7. Système (1) selon l'une quelconque des revendications précédentes, dans lequel la première unité (11) comprend une première interface de transmission de données sans-fil vers et depuis un premier équipement distant (15), et la seconde unité (12) comprend une seconde interface de transmission de données sans-fil vers et depuis un second équipement distant (16).

8. Système (1) selon la revendication précédente, dans lequel la première unité (11) comporte :
- un équipement antennaire (21) apte à recevoir des signaux sur des fréquences d'usage des réseaux mobiles inférieures à 6 GHz avec un gain supérieur ou égal à 6 dBi,
- un équipement (22) supportant un débit descendant de données supérieur ou égal à 500 mégabits par seconde,
- un routeur (23) supportant un débit descendant de données supérieur ou égal à 500 mégabits par seconde et présentant un port Ethernet de type « PoE In » supportant un débit descendant supérieur ou égal à 1 Gigabits par seconde, de préférence supérieur à 10 gigabits par seconde.

9. Système (1) selon l'une quelconque des revendications 7 à 8, dans lequel la seconde unité (12) comporte :
- un équipement antennaire (26) de type « dual band » apte à émettre en Wi-fi un débit de données supérieur à 500 mégabits par seconde,
- un équipement (25) supportant un débit descendant de données supérieur ou égal à 500 mégabits par seconde,
- un routeur (24) supportant un débit descendant de données supérieur ou égal à 500 mégabits par seconde et présentant un port Ethernet supportant un débit descendant supérieur ou égal à 1 gigabit par seconde, de préférence supérieur à 10 gigabits par seconde.

10. Système (1) selon l'une quelconque des revendications précédentes, dans lequel au moins une des unités comprend un serveur dynamique de distribution d'adresses IP.

11. Système (1) selon l'une quelconque des revendications précédentes, dans lequel au moins l'une des unités (11, 12) présente un volume total inférieur ou égal à 1200 centimètres cubes.

12. Système (1) selon l'une quelconque des revendications précédentes, dans lequel l'ouvrant (13) forme une fenêtre d'habitation.

13. Procédé (100) d'installation d'un système (1) de transmission de données selon l'une quelconque des revendications précédentes, dans lequel, la paroi présentant un joint (19) souple entre l'ouvrant (13) et le dormant (14), on étend (40) les moyens de transmission (18) de données et les moyens (18) de connexion électrique à travers la paroi entre l'ouvrant (13) et le joint (19), de sorte que, une fois étendus, les moyens de transmission (18) de données et les moyens de connexion (18) électrique ne gênent ni une ouverture ni une fermeture de l'ouvrant (13).

14. Procédé (100) d'installation d'un système (1) de transmission de données selon la revendication précédente, dans lequel, la paroi séparant un espace extérieur d'un espace intérieur,
- on fixe (10, 20) la première unité (11) à une surface de la paroi orientée vers l'espace extérieur,
- on fixe (10, 20) la seconde unité (12) à une surface de la paroi orientée vers l'espace extérieur, et
- on connecte (30) la seconde unité (12) à une source d'alimentation (27) électrique située dans l'espace intérieur.

## Patentansprüche

1. System (1) zur Datenübertragung durch eine Wand mit einem Flügel (13), der an einen Rahmen (14) angelenkt ist, wobei das System (1) aufweist:
- eine erste Einheit (11) und eine zweite Einheit (12) zur Datenübertragung,
- drahtgebundene Mittel (18) zur Datenübertragung zwischen den beiden Einheiten (11, 12), die dazu bestimmt sind, sich durch die Wand zu erstrecken und zwischen dem Flügel (13) und dem Rahmen (14) hindurchzugehen, um Daten von einer der Einheiten (12) zur anderen (11) zu übertragen,
- drahtgebundene Mittel (18) zur elektrischen Verbindung zwischen den beiden Einheiten (11, 12), die dazu bestimmt sind, sich durch die Wand zu erstrecken, indem sie zwischen dem Flügel (13) und dem Rahmen (14) hindurchgehen, um einen elektrischen Strom von einer (12) der Einheiten zur anderen (11) zu übertragen,
wobei das System **dadurch gekennzeichnet ist, dass**:
- die erste Einheit (11) und die zweite Einheit (12) dazu bestimmt sind, an der Wand jeweils auf beiden Seiten der Wand angeordnet zu werden, wobei das System Magnete (17; 35, 36, 37) aufweist, die durch Anziehung zusammenwirken, um die erste Einheit (11) und die zweite Einheit (12) jeweils auf beiden Seiten der Wand durch Festklemmen der Wand zwischen diesen Einheiten zu befestigen;
- die drahtgebundenen Mittel (18) zur Übertragung zwischen den beiden Einheiten (11, 12) geeignet sind, die Daten mit einer Geschwindigkeit von 500 Megabits pro Sekunde oder mehr zu übertragen.

2. System (1) nach dem vorhergehenden Anspruch, bei dem die drahtgebundenen Mittel (18) zur Datenübertragung und/oder zur elektrischen Verbindung eine allgemein ebene Form aufweisen, so dass sie sich zwischen den komplementären aneinanderstoßenden Flächen des Flügels (13) und des Rahmens (14) erstrecken können, wenn sich der Flügel (13) in geschlossener Position auf dem Rahmen (14) befindet.

3. System (1) nach einem der vorhergehenden Ansprüche, bei dem die Mittel zur drahtgebundenen Übertragung (18) von Daten und die Mittel zur drahtgebundenen elektrischen Verbindung (18) ein gemeinsames Ethernet-Kabel (18) umfassen, das sowohl zur Übertragung von Daten mit einer Geschwindigkeit von 500 Megabit pro Sekunde oder mehr als auch zur Übertragung von Strom geeignet ist.

4. System (1) nach einem der vorhergehenden Ansprüche, bei dem die drahtgebundenen Mittel (18) zur Datenübertragung geeignet sind, die Daten mit einer Geschwindigkeit von 750 Megabit pro Sekunde oder mehr, vorzugsweise 1 Gigabit pro Sekunde oder mehr, zu übertragen.

5. System (1) nach einem der vorhergehenden Ansprüche, wobei einer der Magnete (35) ein Hauptmagnet ist, wobei mindestens eine der Einheiten ein Magnetgehäuse (31) aufweist, wobei das Gehäuse einen Absatz (34) zur Positionierung des Hauptmagneten (35) aufweist, der Absatz einen ersten Teil (32) des Gehäuses (31) zur Aufnahme des Hauptmagneten (35) von einem zweiten Teil (33) des Gehäuses (31) trennt, der dazu dienen kann, bei Bedarf einen oder mehrere zusätzliche Magneten (36, 37) aufzunehmen.

6. System (1) nach dem vorhergehenden Anspruch, wobei der Hauptmagnet (35), der oder die zusätzlichen Magnete (36, 37) und das Gehäuse (31) eine allgemein rotationszylindrische Form aufweisen, wobei der erste Teil (32) einen ersten Durchmesser hat, der zweite Teil (33) einen zweiten Durchmesser hat, der kleiner als der erste Durchmesser ist, und der zweite Teil (33) koaxial zum ersten Teil (32) ist.

7. System (1) nach einem der vorhergehenden Ansprüche, wobei die erste Einheit (11) eine erste Schnittstelle zur drahtlosen Datenübertragung zu und von einer ersten entfernten Einrichtung (15) aufweist, und die zweite Einheit (12) eine zweite Schnittstelle zur drahtlosen Datenübertragung zu und von einer zweiten entfernten Einrichtung (16) aufweist.

8. System (1) nach dem vorhergehenden Anspruch, wobei die erste Einheit (11) aufweist:
- eine Antenneneinrichtung (21), die geeignet ist, Signale auf Nutzungsfrequenzen von Mobilfunknetzen unterhalb von 6 GHz mit einem Gewinn von 6 dBi oder mehr zu empfangen,
- eine Einrichtung (22), die eine Datenabwärtsrate von 500 Megabits pro Sekunde oder mehr unterstützt,
- einen Router (23), der eine Daten-Downloadrate von mehr als oder gleich 500 Megabit pro Sekunde unterstützt und einen Ethernet-Port vom Typ "PoE In" aufweist, der eine Downstreamrate von mehr als oder gleich 1 Gigabit pro Sekunde, vorzugsweise mehr als 10 Gigabit pro Sekunde, unterstützt.

9. System (1) nach einem der Ansprüche 7 bis 8, wobei die zweite Einheit (12) aufweist:
- eine Antenneneinrichtung (26) vom Typ "dual band", die geeignet ist, in Wi-fi eine Datenrate von mehr als 500 Megabit pro Sekunde zu senden,
- eine Einrichtung (25), die eine Datenrate im Downstream unterstützt, die größer oder gleich 500 Megabits pro Sekunde ist,
- einen Router (24), der eine Daten-Downloadrate von mindestens 500 Megabit pro Sekunde unterstützt und einen Ethernet-Anschluss aufweist, der eine Downstreamrate von mindestens 1 Gigabit pro Sekunde, vorzugsweise von mehr als 10 Gigabit pro Sekunde, unterstützt.

10. System (1) nach einem der vorhergehenden Ansprüche, wobei mindestens eine der Einheiten einen dynamischen Server zur Verteilung von IP-Adressen aufweist.

11. System (1) nach einem der vorhergehenden Ansprüche, wobei mindestens eine der Einheiten (11, 12) ein Gesamtvolumen von weniger als oder gleich 1200 Kubikzentimetern aufweist.

12. System (1) nach einem der vorhergehenden Ansprüche, wobei der Flügel (13) ein Wohnraumfenster bildet.

13. Verfahren (100) zur Installation eines Datenübertragungssystems (1) nach einem der vorhergehenden Ansprüche, wobei die Wand eine flexible Dichtung (19) zwischen dem Flügel (13) und dem Rahmen (14) aufweist, die Datenübertragungsmittel (18) und die elektrischen Verbindungsmittel (18) durch die Wand zwischen dem Flügel (13) und der Dichtung (19) ausgedehnt (40) werden, so dass die Datenübertragungsmittel (18) und die elektrischen Verbindungsmittel (18), wenn sie ausgedehnt sind, weder ein Öffnen noch ein Schließen des Flügels (13) behindern.

14. Verfahren (100) zur Installation eines Datenübertragungssystems (1) nach dem vorhergehenden Anspruch, bei dem die Wand, die einen Außenraum von einem Innenraum trennt,
- Befestigen (10, 20) der ersten Einheit (11) an einer dem Außenraum zugewandten Fläche der Wand,
- Befestigen (10, 20) der zweiten Einheit (12) an einer dem Außenraum zugewandten Fläche der Wand, und
- Verbinden (30), der zweiten Einheit (12) mit einer elektrischen Stromquelle (27), die sich im Innenraum befindet.

## Claims

1. System (1) for transmitting data through a wall comprising a leaf (13) hinged on a frame (14), the system (1) comprising:
- a first unit (11) and a second unit (12) for transmitting data,
- wire means (18) for transmitting data between the two units (11, 12), intended to extend through the wall by passing between the leaf (13) and the frame (14) to transmit data from one of the units (12) to the other (11),
- wire means (18) for electrical connection between the two units (11, 12), intended to extend through the wall by passing between the leaf (13) and the frame (14) to transmit an electric current from one of the units (12) to the other (11), the system being **characterised in that**:
- the first unit (11) and the second unit (12) are intended to be arranged on the wall respectively each side of the wall, the system comprising magnets (17; 35, 36, 37) cooperating by attraction so as to fix the first unit (11) and the second unit (12) respectively on each side of the wall by clamping the wall between these units;
- the wire means (18) for transmitting between the two units (11, 12) are capable of transmitting the data at a rate of greater than or equal to 500 megabits per second.

2. System (1) according to the preceding claim, wherein the wire means (18) for transmitting data and/or for electrical connection have a generally flat shape so as to be able to extend between the complementary adjacent surfaces of the leaf (13) and of the frame (14) when the leaf (13) is in the closed position on the frame (14).

3. System (1) according to any one of the preceding claims, wherein the wire means (18) for transmitting data and the wire means (18) for electrical connection comprise a common Ethernet cable (18) capable of transmitting the data at a rate of greater than or equal to 500 megabits per second and of transmitting the current.

4. System (1) according to any one of the preceding claims, wherein the wire means (18) for transmitting data are capable of transmitting the data at a rate of greater than or equal to 750 megabits per second, preferably greater than or equal to 1 gigabit per second.

5. System (1) according to any one of the preceding claims, wherein one of the magnets (35) being a main magnet, at least one of the units has a magnet housing (31), the housing comprising a shoulder (34) for positioning the main magnet (35), the shoulder separating a first part (32) of the housing (31) intended to house the main magnet (35) from a second part (33) of the housing (31) that can be used, if necessary, to house one or more additional magnets (36, 37).

6. System (1) according to the preceding claim, wherein the main magnet (35), the additional magnet(s) (36, 37) and the housing (31) have a generally cylindrical shape of revolution, the first part (32) having a first diameter, the second part (33) having a second diameter smaller than the first diameter, the second part (33) being coaxial with the first part (32).

7. System (1) according to any one of the preceding claims, wherein the first unit (11) comprises a first wireless interface for transmitting data to and from a first remote device (15), and the second unit (12) comprises a second wireless interface for transmitting data to and from a second remote device (16).

8. System (1) according to the preceding claim, wherein the first unit (11) comprises:
- an antenna device (21) capable of receiving signals on frequencies used by the mobile networks of less than 6 GHz with a gain of greater than or equal to 6 dBi,
- a device (22) supporting a downlink data rate of greater than or equal to 500 megabits per second,
- a router (23) supporting a downlink data rate of greater than or equal to 500 megabits per second and having a "PoE In" type Ethernet port supporting a downlink rate of greater than or equal to 1 gigabit per second, preferably of greater than 10 gigabits per second.

9. System (1) according to claim 7 or 8, wherein the second unit (12) comprises:
- a "dual band" type antenna device (26) capable of transmitting via Wi-Fi a data rate of greater than 500 megabits per second,
- a device (25) supporting a downlink data rate of greater than or equal to 500 megabits per second,
- a router (24) supporting a downlink data rate of greater than or equal to 500 megabits per second and having an Ethernet port supporting a downlink rate of greater than or equal to 1 gigabit per second, preferably of greater than 10 gigabits per second.

10. System (1) according to any one of the preceding claims, wherein at least one of the units comprises a dynamic IP address distribution server.

11. System (1) according to any one of the preceding claims, wherein at least one of the units (11, 12) has a total volume of less than or equal to 1200 cubic centimetres.

12. System (1) according to any one of the preceding claims, wherein the leaf (13) forms a house window.

13. Method (100) for installing a data transmission system (1) according to any one of the preceding claims, wherein, the wall having a flexible seal (19) between the leaf (13) and the frame (14), the data transmission means (18) and the electrical connection means (18) are extended (40) through the wall between the leaf (13) and the seal (19), so that, once extended, the data transmission means (18) and the electrical connection means (18) do not obstruct the opening or closing of the leaf (13).

14. Method (100) for installing a data transmission system (1) according to the preceding claim, wherein, the wall separating an exterior space from an interior space,
- the first unit (11) is fixed (10, 20) to a surface of the wall oriented towards the exterior space,
- the second unit (12) is fixed (10, 20) to a surface of the wall oriented towards the exterior space, and
- the second unit (12) is connected (30) to an electrical power source (27) located in the interior space.
